(19) Europäisches Patentamt
European Patent Office
Office européen des brevets

(11) **EP 4 411 567 A1**

(12) **EUROPEAN PATENT APPLICATION**
published in accordance with Art. 153(4) EPC

(43) Date of publication:
**07.08.2024 Bulletin 2024/32**

(21) Application number: **22882474.4**

(22) Date of filing: **05.09.2022**

(51) International Patent Classification (IPC):
**G06F 16/9535** (2019.01)

(52) Cooperative Patent Classification (CPC):
**G06F 16/9535; G06N 3/0464; G06N 3/08; G06Q 30/0601**

(86) International application number:
**PCT/CN2022/117056**

(87) International publication number:
**WO 2023/065859 (27.04.2023 Gazette 2023/17)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **20.10.2021 CN 202111223081**

(71) Applicant: **Huawei Technologies Co., Ltd.**
**Shenzhen, Guangdong 518129 (CN)**

(72) Inventors:
• LU, Biao
  Shenzhen, Guangdong 518129 (CN)
• ZHU, Jieming
  Shenzhen, Guangdong 518129 (CN)
• HE, Xiuqiang
  Shenzhen, Guangdong 518129 (CN)
• WANG, Zhaowei
  Shenzhen, Guangdong 518129 (CN)

(74) Representative: **Epping - Hermann - Fischer Patentanwaltsgesellschaft mbH**
**Schloßschmidstraße 5**
**80639 München (DE)**

(54) **ITEM RECOMMENDATION METHOD AND APPARATUS, AND STORAGE MEDIUM**

(57)    This application relates to the artificial intelligence field, and in particular, to an item recommendation method and apparatus, and a storage medium. The method includes: obtaining historical interaction data of a target object, where the historical interaction data indicates a historical interaction event between the target object and at least one item; obtaining a pre-trained target recommendation model, where the target recommendation model includes a graph neural network model with one convolutional layer, and the convolutional layer indicates an association relationship between a sample object and a sample item; and invoking, based on the historical interaction data, the target recommendation model to output a target item corresponding to the target object. In the embodiments of this application, a framework structure of the target recommendation model is simplified, so that model operation time is greatly reduced. In this way, the model is easily promoted for use because operation efficiency of the model is improved, thereby ensuring recommendation effect of subsequent item recommendation based on the model.

FIG. 4

## Description

This application claims priority to Chinese Patent Application No. 202111223081.8, filed with the China National Intellectual Property Administration on October 20, 2021 and entitled "ITEM RECOMMENDATION METHOD AND APPARATUS, AND STORAGE MEDIUM", which is incorporated herein by reference in its entirety.

## TECHNICAL FIELD

This application relates to the artificial intelligence field, and in particular, to an item recommendation method and apparatus, and a storage medium.

## BACKGROUND

In a personalized recommendation system, the most important thing is to accurately predict a preference degree of a user for a specific item, which not only affects user experience, but also directly affects revenue of an enterprise. Therefore, user behavior prediction is of great significance.

Before a graph neural network (Graph Neural Network, GNN) is proposed, most recommendation manners based on a graph or network type data are kernel-based methods, graph theory-based regularization, matrix decomposition, and another method. Proposing of the graph neural network provides another solution to this problem and achieves best results on many datasets. Using the graph neural network to learn representations of a user and an item on a graph not only can model high-order information of a corresponding node, but also can simulate context information and a difference between the user and the item.

For the graph neural network, it is very important to learn a propagation step in a low-dimensional vector expression process of a node, which can obtain a hidden state of the node. A method used in the propagation step is usually selecting different aggregate functions and specific update functions, and then performing iterative calculation until convergence is implemented. Therefore, a long calculation process exists, and a model convergence speed is small. As a result, due to low efficiency of the graph neural network, it is difficult to promote the graph neural network for use.

## SUMMARY

In view of this, an item recommendation method and apparatus, and a storage medium are proposed, to resolve a problem that recommendation efficiency is low due to excessively long operation time of a graph neural network.

According to a first aspect, an embodiment of this application provides an item recommendation method, and the method includes:

> obtaining historical interaction data of a target object, where the historical interaction data indicates a historical interaction event between the target object and at least one item;
> obtaining a pre-trained target recommendation model, where the target recommendation model includes a graph neural network model with one convolutional layer, and the convolutional layer indicates an association relationship between a sample object and a sample item; and
> invoking, based on the historical interaction data, the target recommendation model to output a target item corresponding to the target object.

In this implementation, the historical interaction data of the target object is obtained, where the historical interaction data indicates the historical interaction event between the target object and the at least one item; and the pre-trained target recommendation model is invoked based on the historical interaction data, to output the target item corresponding to the target object. Because the target recommendation model includes the graph neural network model with one convolutional layer, and the convolutional layer indicates the association relationship between the sample object and the sample item, a framework structure of the target recommendation model is greatly simplified, so that model operation time is greatly reduced. In this way, the model is easily promoted for use because operation efficiency of the model is improved, thereby ensuring recommendation effect of subsequent item recommendation based on the model.

In a possible implementation, the target recommendation model indicates associated item information corresponding to each of n sample objects and associated object information corresponding to each of m sample items, the associated item information indicates at least one item that has interacted with the sample object, the associated object information indicates at least one object that has interacted with the sample item, and n and m are positive integers.

In this implementation, the pre-trained target recommendation model indicates the associated item information corresponding to each of the n sample objects and the associated object information corresponding to each of the m sample items, where the associated item information indicates the at least one item that has interacted with the sample object, and the associated object information indicates the at least one object that has interacted with the sample item. In other words, the target recommendation model may indicate an operation frequency of the sample object and popularity of the sample item, thereby further ensuring recommendation effect of a subsequent item recommendation based on the model.

In another possible implementation, the target recommendation model further indicates an association relationship between at least two sample items and/or an association relationship between at least two sample objects.

In this implementation, a relationship between items and a relationship between objects are established, so that information hidden in a graph structure can be further used to effectively use other information in the entire graph structure, thereby improving recommendation effect of the target recommendation model.

In another possible implementation, the invoking, based on the historical interaction data, the target recommendation model to output a target item corresponding to the target object includes:

inputting the historical interaction data to the target recommendation model, to output the target item corresponding to the target object, where

the target recommendation model is obtained through training based on at least one sample data group, each sample data group includes sample interaction data and pre-labeled correct recommendation information, and the sample interaction data indicates a sample object and a corresponding sample item.

In this implementation, the target recommendation model is obtained through pre-training based on the at least one sample data group, and each sample data group includes the sample interaction data and the pre-labeled correct recommendation information, and the sample interaction data indicates the sample object and the corresponding sample item, so that the historical interaction data is subsequently input to the trained target recommendation model, to output the target item corresponding to the target object, thereby ensuring accuracy and executability of subsequent item recommendation based on the model.

In another possible implementation, before the obtaining a pre-trained target recommendation model, the method further includes:

obtaining a training sample set, where the training sample set includes the at least one sample data group;

for each of the at least one sample data group, inputting the sample interaction data to an initial parameter model to obtain a training result;

obtaining a training loss value through calculation based on the training result and the correct recommendation information by using a preset loss function, where the training loss value indicates an error between the training result and the correct recommendation information;

adjusting a model parameter in the initial parameter model based on the training loss value corresponding to each of the at least one sample data group; and

when a preset convergence condition is met, obtaining the target recommendation model through training.

In this implementation, the training sample set is obtained; for each sample data group in the training sample set, the sample interaction data is input to the initial parameter model to obtain the training result; the training loss value is obtained through calculation based on the training result and the correct recommendation information by using the preset loss function; the model parameter in the initial parameter model is adjusted based on the training loss value corresponding to each of the at least one sample data group; and when the preset convergence condition is met, the target recommendation model is obtained through training. Because the training loss value is obtained through calculation based on the training result and the correct recommendation information by using the preset loss function, a case in which different aggregate functions and specific update functions need to be selected for iterative calculation in a related technology is avoided, which greatly shortens calculation duration in a training process, and increases a convergence speed of the target recommendation model.

In another possible implementation, the at least one sample data group includes at least one positive sample data group and at least one negative sample data group that is randomly sampled, there is an interaction event between the sample object and the sample item in the positive sample data group, and there is no interaction event between the sample object and the sample item in the negative sample data group.

In this implementation, model training is performed in a training phase of the graph neural network model by using the at least one positive sample data group and the at least one negative sample data group that is randomly sampled. This improves accuracy of the target recommendation model obtained through training, thereby further ensuring recommendation effect of subsequent item recommendation based on the model.

In another possible implementation, the preset loss function includes a first loss function and a second loss function, the first loss function is a loss function that is set based on an association relationship between the sample object and the sample item, and the second loss function is a loss function of a preset type.

In this implementation, the first loss function is set based on the association relationship between the sample object and the sample item, and the training loss value is directly calculated by using the first loss function and the second loss function of the preset type, thereby improving a convergence speed and operation efficiency of the graph neural network model.

In another possible implementation, the preset loss function further includes a third loss function, and the third loss function is a loss function that is set based on an association relationship between at least two sample items.

In this implementation, the third loss function is set based on the association relationship between the at least two sample items, and the training loss value is directly calculated by using the first loss function, the second loss function, and the third loss function. In other words, a relationship between items is modelled and a new loss function is designed, so that information hidden in a graph structure can be further used, thereby improving accuracy of the target recommendation model obtained through training.

In another possible implementation, the preset loss function further includes a fourth loss function, and the fourth loss function is a loss function that is set based on an association relationship between at least two sample objects.

In this implementation, the fourth loss function is set based on the association relationship between the at least two sample objects, and the training loss value is directly calculated by using the first loss function, the second loss function, and the fourth loss function (or the first loss function, the second loss function, the third loss function, and the fourth loss function). In other words, a relationship between objects is modelled and a new loss function is designed, so that information hidden in a graph structure can be further used, thereby improving accuracy of the target recommendation model obtained through training.

In another possible implementation, the item includes at least one of text, a link, a product, a service, and concept information.

In this implementation, the item may include at least one of the text, the link, the product, the service, and the concept information. To be specific, the item recommendation method provided in this embodiment of this application may be applied to a plurality of recommendation scenarios, for example, a scenario in which a new document, a new commodity, or a new application program is recommended, so that an application range is wide.

According to a second aspect, an embodiment of this application provides an item recommendation apparatus, and the apparatus includes:

a first obtaining unit, configured to obtain historical interaction data of a target object, where the historical interaction data indicates a historical interaction event between the target object and at least one item;

a second obtaining unit, configured to obtain a pre-trained target recommendation model, where the target recommendation model includes a graph neural network model with one convolutional layer, and the convolutional layer indicates an association relationship between a sample object and a sample item; and

an invoking unit, configured to invoke, based on the historical interaction data, the target recommendation model to output a target item corresponding to the target object.

In a possible implementation, the target recommendation model indicates associated item information corresponding to each of n sample objects and associated object information corresponding to each of m sample items, the associated item information indicates at least one item that has interacted with the sample object, the associated object information indicates at least one object that has interacted with the sample item, and n and m are positive integers.

In another possible implementation, the target recommendation model further indicates an association relationship between at least two sample items and/or an association relationship between at least two sample objects.

In another possible implementation, the invoking unit is further configured to:

input the historical interaction data to the target recommendation model, to output the target item corresponding to the target object, where

the target recommendation model is obtained through training based on at least one sample data group, each sample data group includes sample interaction data and pre-labeled correct recommendation information, and the sample interaction data indicates a sample object and a corresponding sample item.

In another possible implementation, the apparatus further includes a training unit, and the training unit is configured to:

obtain a training sample set, where the training sample set includes the at least one sample data group;

for each of the at least one sample data group, input the sample interaction data to an initial parameter model to obtain a training result;

obtain a training loss value through calculation based on the training result and the correct recommendation information by using a preset loss function, where the training loss value indicates an error between the training result and the correct recommendation information;
adjust a model parameter in the initial parameter model based on the training loss value corresponding to each of the at least one sample data group; and
when a preset convergence condition is met, obtain the target recommendation model through training.

In another possible implementation, the at least one sample data group includes at least one positive sample data group and at least one negative sample data group that is randomly sampled, there is an interaction event between the sample object and the sample item in the positive sample data group, and there is no interaction event between the sample object and the sample item in the negative sample data group.

In another possible implementation, the preset loss function includes a first loss function and a second loss function, the first loss function is a loss function that is set based on an association relationship between the sample object and the sample item, and the second loss function is a loss function of a preset type.

In another possible implementation, the preset loss function further includes a third loss function, and the third loss function is a loss function that is set based on an association relationship between at least two sample items.

In another possible implementation, the preset loss function further includes a fourth loss function, and the fourth loss function is a loss function that is set based on an association relationship between at least two sample objects.

In another possible implementation, the item includes at least one of text, a link, a product, a service, and concept information.

According to a third aspect, an embodiment of this application provides an item recommendation apparatus, and the apparatus includes:

a processor; and
a memory configured to store instructions that can be executed by the processor.

The processor is configured to: when executing the instructions, implement the method provided in any one of the first aspect or the possible implementations of the first aspect.

According to a fourth aspect, an embodiment of this application provides a nonvolatile computer-readable storage medium. The nonvolatile computer-readable storage medium stores computer program instructions, and when the computer program instructions are executed by a processor, the method according to any one of the first aspect or the possible implementations of the first aspect is implemented.

According to a fifth aspect, an embodiment of this application provides a computer program product. The computer program product includes computer-readable instructions, and when the computer-readable instructions are run on a computer device, the computer device is enabled to perform the method provided in any one of the first aspect or the possible implementations of the first aspect.

## BRIEF DESCRIPTION OF DRAWINGS

The accompanying drawings included in this specification and constituting a part of this specification and this specification jointly show example embodiments, features, and aspects of this application, and are intended to explain the principle of this application.

FIG. 1 is a schematic diagram of a principle of a graph convolutional neural network model in a related technology;
FIG. 2 is a schematic diagram of an application scenario according to an embodiment of this application;
FIG. 3 is a schematic diagram of a structure of a computer device according to an example embodiment of this application;
FIG. 4 is a flowchart of an item recommendation method according to an example embodiment of this application;
FIG. 5 is a flowchart of a training process of a target recommendation model according to an example embodiment of this application;
FIG. 6 is a schematic diagram of an interaction status that is between an object and an item and that is indicated by a training sample set according to an example embodiment of this application;
FIG. 7 is a schematic diagram of a first adjacency matrix file according to an example embodiment of this application;
FIG. 8 is a schematic diagram of a principle of an item recommendation method according to an example embodiment of this application;
FIG. 9 is a schematic diagram of a principle of an item recommendation method according to an example embodiment of this application;
FIG. 10A and FIG. 10B are schematic diagrams of application interfaces related to an item recommendation method according to an example embodiment of this application; and
FIG. 11 is a block diagram of an item recommendation apparatus according to an example embodiment of this application.

## DESCRIPTION OF EMBODIMENTS

The following describes various example embodiments, features, and aspects of this application in detail with reference to the accompanying drawings. Same reference numerals in the accompanying drawings indicate elements that have same or similar functions. Although various aspects of embodiments are shown in the accompanying drawings, unless otherwise specified, the accompanying drawings do not need to be drawn to scale.

The term "example" specially used herein means "used as an example, an embodiment, or an illustration". Any embodiment described as an "example" herein is unnecessarily explained as being more preferred or better than other embodiments.

In addition, to better describe this application, numerous specific details are given in the following specific implementations. A person skilled in the art should understand that this application can also be implemented without some specific details. In some instances, methods, means, elements, and circuits that are well-known to a person skilled in the art are not described in detail, to highlight the subject matter of this application.

First, some nouns in the embodiments of this application are described. 1. Artificial intelligence (Artificial Intelligence, AI): Artificial intelligence is a theory, a method, a technology, and an application system in which a digital computer or a machine controlled by a digital computer is used to simulate, extend, and expand human intelligence, perceive an environment, obtain knowledge, and use the knowledge to obtain a best result. In other words, artificial intelligence is a comprehensive technology of computer science, and is intended to understand essence of intelligence and produce a new intelligent machine that can make a response in a manner similar to human intelligence. Artificial intelligence is to study design principles and implementation methods of various intelligent machines, so that the machines have perception, inference, and decision-making functions.

An artificial intelligence technology is a comprehensive subject, and relates to a wide range of fields, including both a hardware-layer technology and a software-layer technology. Basic artificial intelligence technologies include technologies such as a sensor, a dedicated artificial intelligence chip, cloud computing, distributed storage, a big data processing technology, an operating/interaction system, and electromechanical integration. Artificial intelligence software technologies mainly include several maj or directions such as a computer vision technology, a voice processing technology, a natural language processing technology, and machine learning/deep learning.

2. Natural language processing (natural language processing, NLP): Natural language processing is an important direction in the field of computer science and the field of artificial intelligence, and studies various theories and methods that can implement effective communication between a human and a computer by using a natural language. Natural language processing is a science that integrates linguistics, computer science, and mathematics. Therefore, a study of this field relates to a natural language, that is, a language daily used by people, so that the study is closely related to a study of linguistics. Natural language processing technologies usually include technologies such as text processing, semantic understanding, machine translation, question answering of a robot, and a knowledge graph.

3. Machine learning (Machine Learning, ML): Machine learning is a multi-field interdisciplinary subject and relates to a plurality of subjects such as a probability theory, statistics, an approximation theory, convex analysis, and an algorithm complexity theory. Machine learning focuses on a study of how a computer simulates or implements learning behavior of human beings, to obtain new knowledge or skills and reorganize an existing knowledge structure to continuously improve performance of the computer. Machine learning is a core of artificial intelligence and is a fundamental way to make a computer intelligent, and application of machine learning pervades various fields of artificial intelligence. Machine learning and deep learning usually include technologies such as an artificial neural network, a confidence network, reinforcement learning, transfer learning, inductive learning, and teaching learning.

4. Graph neural network: The graph neural network is a general deep learning architecture that can run on a social network or other graph data, and is a generalized neural network based on a graph structure. A graph network usually uses a bottom-layer graph as a computational graph, and transfers, transforms, and aggregates node feature information on the entire graph to learn a neural network element to generate a single-node embedding vector.

5. Interaction data: The interaction data includes data about an operation performed by an object on an item in a recommendation system, and indicates an interaction event between the object and at least one item. For example, the object is a user, the item is at least one of product information, service information, and concept information, and the interaction event includes at least one of browsing, tapping, downloading, purchasing, and commenting. This is not limited in the embodiments of this application.

6. Association relationship between an object and an item: An adjacent item of an object and an adjacent object of an item may be learned based on the association relationship.

An adjacent object of an item is an object that has operated the item. For example, an adjacent object of an item i includes an object that has tapped and/or downloaded the item i.

An adjacent item of an object is an item that has been operated by the object. For example, an adjacent item of an obj ect u includes an item that has been tapped and/or downloaded by the object u.

In a related technology, the following several types of graph neural networks are derived from an original graph neural network.

1. Graph convolutional network (Graph Convolutional Network, GCN): The graph convolutional network aims to extend convolution to a graph domain. The GCN is configured to extract a spatial feature of a topological graph, and two most mainstream manners are achieving the objective in a spatial domain (spatial domain) and a spectral domain (spectral domain). The GCN and a related variant thereof belong to this direction.

2. Graph recurrent network: A gating mechanism of a graph neural network (Recurrent Neural Network, RNN) is applied to node propagation to break through some limitations of the original GNN and improve efficiency of long-distance information propagation on a graph. For example, a graph recurrent network model includes models such as a long short-term memory (Long Short-Term Memory, LSTM) network and a gated recurrent unit (Gated Recurrent Unit, GRU).

3. Graph attention network: An attention mechanism allocates different attention scores to adjacent nodes of a current node to identify a more important adjacent node. For example, a graph attention network model includes models such as a graph attention network (Graph Attention Network, GAT) and a gated attention network (Gated Attention Network, GAAN).

4. Graph residual network: A residual connection is used to resolve a problem that an effect deteriorates due to noise introduced by more than three graph convolutional layers.

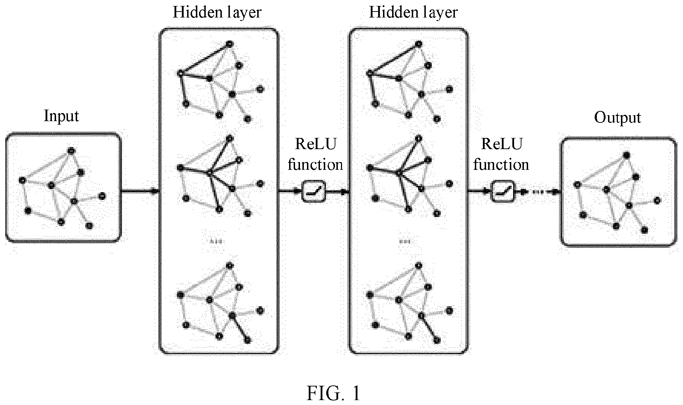

In a related technology, an example in which a graph neural network model is a graph convolutional neural network model is used. A schematic diagram of a principle of the graph convolutional neural network model is shown in FIG. 1, and the graph convolutional neural network model includes a plurality of hidden layers (Hidden layer) and a plurality of activation functions. For example, the activation function is a rectified linear unit (Rectified Linear Unit, ReLU) function. In a graph convolutional neural network, each node changes a state of the node due to impact of all other nodes until final balance is achieved, and a closer node has a larger impact. The graph convolutional neural network model uses a transductive learning (Transductive learning) manner. To obtain an embedding (embedding) expression, all nodes need to participate in training. In other words, a node feature update manner is completed based on aggregation of information about neighboring nodes. This calculation manner inevitably requires specific calculation time, causing slow model convergence. As a result, due to low efficiency of the graph neural network model, it is difficult to promote the graph neural network model for use. Therefore, the embodiments of this application provide an item recommendation method and apparatus, and a storage medium, to resolve a problem that recommendation efficiency is low due to excessively long operation time of a graph neural network.

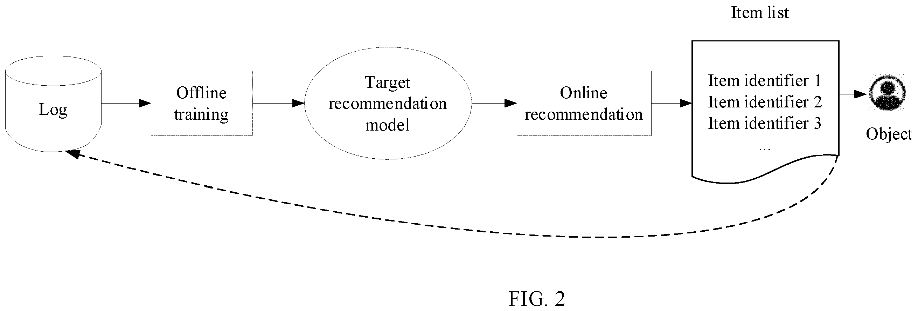

The item recommendation method provided in the embodiments of this application is applicable to different recommendation scenarios based on a graph neural network model. FIG. 2 is a schematic diagram of an application scenario of an embodiment of this application.

When an object enters a recommendation system, the recommendation system pushes, to the object based on a log (including various interaction data of the object) of the object, an item that may be of interest to the object, and then stores, in the log, interaction data between the object and a returned result. The interaction data indicates an interaction event, for example, browsing, tapping, downloading, purchasing, or commenting, between the object and at least one item.

In a model training phase, a target recommendation model collects statistics about a log (including historical interaction data of at least one object) in a preset periodicity, performs offline training on the target recommendation model based on the historical interaction data of the at least one object, and pushes a trained target recommendation model to go online.

In a recommendation phase, the trained target recommendation model is invoked online to output and display a to-be-recommended item list. The item list includes an item identifier 1, an item identifier 2, an item identifier 3, and the like. A latest point of interest of the object is determined by updating the interaction data of the object, so as to push a latest related item to the object to improve recommendation effect. To be specific, updated interaction data of the object is recorded, and the updated interaction data is stored in the log as data for next model training, to ensure a model effect.

It may be understood that the scenario in FIG. 2 is merely an example, and the technical solutions of this application may be further applied to another scenario provided that the scenario relates to recommending an item to an object based on historical interaction data of the object. The item includes at least one of text, a link, a product, a service, and concept information. The technical solutions of this application may be applied to a scenario in which a commenting website recommends a new restaurant to an object based on a restaurant at which the object has dined, or the like. The technical solutions of this application may be further applied to a scenario in which a shopping website recommends a new commodity to an object based on a commodity that has been purchased by the object, or the like.

The technical solutions of this application may be further applied to a scenario in which an AppGallery recommends a new application program to an object based on an application program that has been downloaded by the object, or the like. This is not limited in this embodiment of this application.

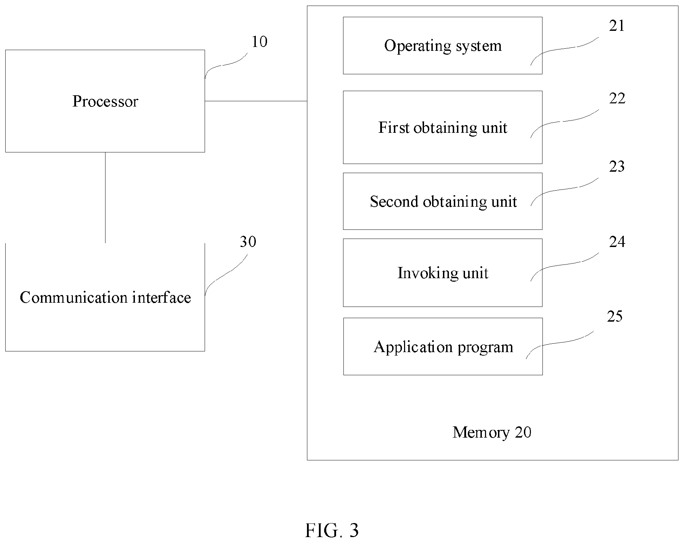

An embodiment of this application provides an item recommendation method, and which is performed by a computer device. FIG. 3 is a schematic diagram of a structure of a computer device according to an example embodiment of this application.

The computer device may be a terminal or a server. The terminal includes a mobile terminal or a fixed terminal. For example, the terminal may be a mobile phone, a tablet computer, a laptop portable computer, a desktop computer, or the like. The server may be one server, may be a server cluster including a plurality of servers, or may be a cloud computing service center.

Optionally, an item recommendation program is installed on the computer device, and the item recommendation program is an application program having an item recommendation function.

As shown in FIG. 3, the computer device includes a processor 10, a memory 20, and a communication interface 30. A person skilled in the art may understand that the structure shown in FIG. 1 does not constitute any limitation on the computer device. The computer device may include more or fewer components than those shown in the figure, or combine some components, or has different component arrangements.

The processor 10 is a control center of the computer device, connects various parts of the entire computer device by using various interfaces or lines, and performs various functions of the computer device and processes data by running or executing a software program and/or a module stored in the memory 20 and invoking data stored in the memory 20, to perform overall control over the computer device. The processor 10 may be implemented by a CPU, or may be implemented a graphics processing unit (Graphics Processing Unit, GPU).

The memory 20 may be configured to store a software program and a module. The processor 10 performs various function applications and data processing by running the software program and the module that are stored in the memory 20. The memory 20 may mainly include a program storage area and a data storage area. The program storage area may store an operating system 21, a first obtaining unit 22, a second obtaining unit 23, an invoking unit 24, and an application program 25 required by at least one function (for example, neural network training), and the like. The data storage area may store data and the like created based on use of the computer device. The memory 20 may be implemented by any type of volatile or nonvolatile storage device or a combination thereof, for example, a static random access memory (Static Random Access Memory, SRAM), an electrically erasable programmable read-only memory (Electrically Erasable Programmable Read-Only Memory, EEPROM), an erasable programmable read-only memory (Erasable Programmable Read Only Memory, EPROM), a programmable read-only memory (Programmable Read-Only Memory, PROM), a read-only memory (Read-Only Memory, ROM), a magnetic memory, a flash memory, a magnetic disk, or an optical disc. Correspondingly, the memory 20 may further include a memory controller, to provide the processor 10 with access to the memory 20.

The processor 20 performs the following function by running the first obtaining unit 22: obtaining historical interaction data of a target object, where the historical interaction data indicates a historical interaction event between the target object and at least one item. The processor 20 performs the following function by running the second obtaining unit 23: obtaining a pre-trained target recommendation model, where the target recommendation model includes a graph neural network model with one convolutional layer, and the convolutional layer indicates an association relationship between a sample object and a sample item. The processor 20 performs the following function by running the invoking unit 24: invoking, based on the historical interaction data, the target recommendation model to output a target item corresponding to the target object.

The following describes, by using several example embodiments, the item recommendation method provided in the embodiments of this application.

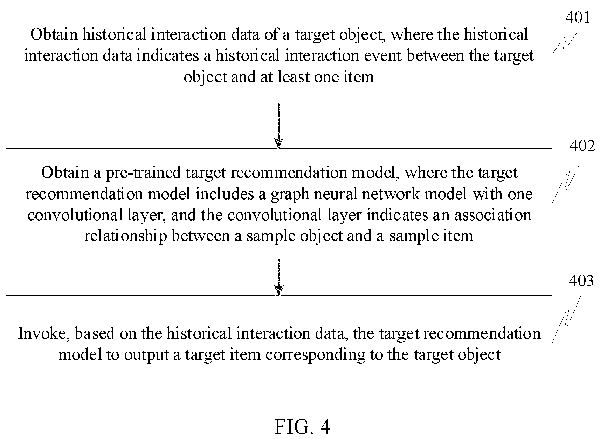

FIG. 4 is a flowchart of an item recommendation method according to an example embodiment of this application. This embodiment is described by using an example in which the method is applied to the computer device shown in FIG. 3. The method includes the following several steps.

Step 401: Obtain historical interaction data of a target object, where the historical interaction data indicates a historical interaction event between the target object and at least one item. Optionally, when receiving a first trigger signal, the computer device obtains the historical interaction data of the target object. Alternatively, the computer device obtains the historical interaction data of the target object at a preset time interval.

For example, the first trigger signal is a user operation signal that triggers item recommendation. For example, the first trigger signal includes any one or a combination of a tap operation signal, a slide operation signal, a press operation signal, or a press and hold operation signal.

In another possible implementation, the first trigger signal may alternatively be implemented in a voice form. For example, the computer device receives a voice signal that is input by a user, parses the voice signal to obtain voice content, and when a keyword matching preset information exists in the voice content, determines that the first trigger signal is received.

The preset time interval is set by default or is customized. This is not limited in this embodiment. Optionally, the historical interaction data includes data historically interacted between the target object and at least one item.

Optionally, the historical interaction data is obtained in a preset statistical periodicity before a current moment. The preset statistical periodicity is set by default or is customized. This is not limited in this embodiment.

Optionally, the historical interaction data indicates a historical interaction event between the target object and at least one item in a plurality of applications.

Optionally, the historical interaction data indicates a historical interaction event between the target object and the at least one item in a target application, and the target application is an application of a preset type, at least one preset application, or an application corresponding to the first trigger signal.

Optionally, the interaction event includes at least one of events in browsing, tapping, downloading, purchasing, and commenting. This is not limited in this embodiment of this application. Optionally, the item includes at least one of text, a link, a product, a service, and concept information. This is not limited in this embodiment of this application.

Step 402: Obtain a pre-trained target recommendation model, where the target recommendation model includes a graph neural network model with one convolutional layer, and the convolutional layer indicates an association relationship between a sample object and a sample item.

The computer device obtains a trained target recommendation model. In a possible implementation, when the computer device is a terminal, the terminal obtains a trained target recommendation model stored in the terminal, or obtains a trained target recommendation model from a server. In another possible implementation, when the computer device is a server, the server obtains a trained target recommendation model stored in the server.

The target recommendation model includes a model obtained by training a graph neural network by using sample interaction data and correct recommendation information, and the sample interaction data indicates a sample object and a corresponding sample item. In other words, the target recommendation model is determined based on the sample interaction data and the correct recommendation information. The correct recommendation information is a pre-labeled correct to-be-recommended item corresponding to the sample interaction data.

The target recommendation model is a graph neural network model that has a function of performing directional recommendation based on the historical interaction data of the target object. The target recommendation model is configured to convert input historical interaction data into a to-be-recommended target item.

The target recommendation model indicates an association relationship between a sample object and a sample item.

The target recommendation model is a preset mathematical model, and the target recommendation model includes a model coefficient between a sample object and a sample item. The model coefficient may be a fixed value, may be a value dynamically modified over time, or may be a value dynamically modified with a use scenario.

Optionally, the target recommendation model includes a graph neural network model, and the graph neural network model is a graph neural network model having only one convolutional layer. To be specific, the target recommendation model is the graph neural network model, or is a hybrid model of a graph neural network and another neural network. The graph neural network is a graph neural network having only one convolutional layer, and the convolutional layer indicates an association relationship between a sample object and a sample item. For example, the another neural network is an LSTM. This is not limited in this embodiment of this application.

Step 403: Invoke, based on the historical interaction data, the target recommendation model to output a target item corresponding to the target object.

Optionally, the computer device inputs the historical interaction data to the target recommendation model, to output the target item corresponding to the target object.

Optionally, the target item is at least one to-be-recommended item. The target item is at least one item that is of interest to the target object and that is predicted based on the historical interaction data of the target object. For example, an output result of the target recommendation model includes at least one item identifier, and the item identifier uniquely indicates an item in a plurality of items.

For example, the computer device inputs the historical interaction data to the target recommendation model, to output a to-be-recommended item sequence corresponding to the target object: an item identifier 1, an item identifier 2, and an item identifier 3.

Optionally, when the computer device is a terminal, the target object is one object, an input parameter (that is, the historical interaction data of the target object) of the target recommendation model includes historical interaction data of the object, and an output parameter (that is, the target item corresponding to the target object) of the target recommendation model includes at least one to-be-recommended item corresponding to the object. After the target item corresponding to the target object is output, the terminal displays the at least one to-be-recommended item. Optionally, when the computer device is a server, the target object is n objects, where n is a positive integer; an input parameter (that is, the historical interaction data of the target object) of the target recommendation model includes historical interaction data corresponding to each of the n objects; and an output parameter (that is, the target item corresponding to the target object) of the target recommendation model includes at least one to-be-recommended item corresponding to each of the n objects. After the target item corresponding to the target object is output, the server stores the output result. For a terminal corresponding to any of the n objects, the server sends the corresponding at least one to-be-recommended item to the terminal; or after receiving an item recommendation request sent by the terminal, the server sends the corresponding at least one to-be-recommended item to the terminal.

In conclusion, in this embodiment of this application, the historical interaction data of the target object is obtained, where the historical interaction data indicates the historical interaction event between the target object and the at least one item; and the pre-trained target recommendation model is invoked based on the historical interaction data, to output the target item corresponding to the target object. Because the target recommendation model includes the graph neural network model with one convolutional layer, and the convolutional layer indicates the association relationship between the sample object and the sample item, a framework structure of the target recommendation model is greatly simplified, so that model operation time is greatly reduced. In this way, the model is easily promoted for use because operation efficiency of the model is improved, thereby ensuring recommendation effect of subsequent item recommendation based on the model.

It should be noted that, before the computer device obtains the target recommendation model, a training sample set needs to be trained to obtain the target recommendation model. The following describes a process of training the target recommendation model.

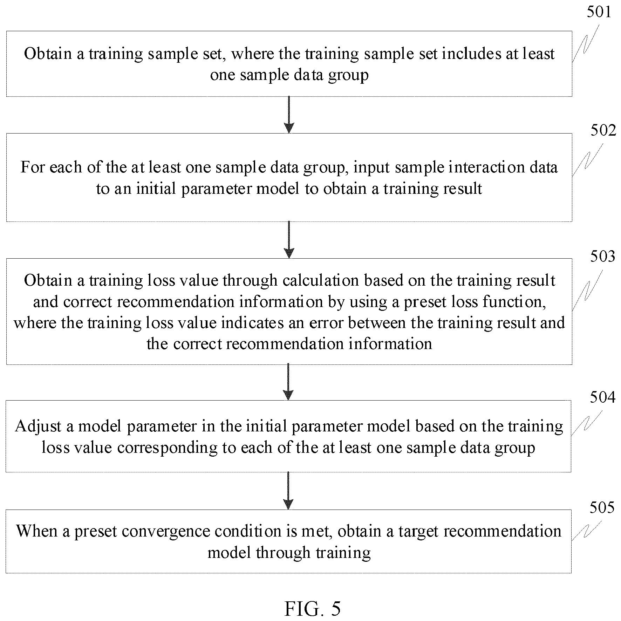

In a possible implementation, as shown in FIG. 5, the process of training the target recommendation model includes the following several steps.

Step 501: Obtain a training sample set, where the training sample set includes at least one sample data group.

The target recommendation model is obtained through training based on at least one sample data group, each sample data group includes sample interaction data and pre-labeled correct recommendation information, and the sample interaction data indicates a sample object and a corresponding sample item.

The sample interaction data in the training sample set indicates interaction events that are generated between a displayed item and a plurality of sample objects in a system and that are obtained through statistics collection in a preset statistical periodicity. The interaction event includes at least one of browsing, tapping, downloading, purchasing, and commenting. This is not limited in this embodiment of this application.

Optionally, the sample interaction data includes a sample object identifier and a corresponding sample item identifier, the sample object identifier uniquely identifies a sample object in a plurality of objects, and the sample item identifier uniquely identifies a sample item in a plurality of items. In this embodiment of this application, only an identifier feature (that is, an object identifier or an item identifier) of a node is used as an example for description, and other features (for example, text information, a label, time, and a region) of the node are not used. These features may also be used for a vector representation of the node.

Optionally, the sample interaction data further includes an identifier of an interaction event between a sample object and a sample item and/or an occurrence moment of the interaction event, and the interaction event identifier uniquely identifies the interaction event in a plurality of interaction events.

Optionally, the sample interaction data further includes another feature of the interaction event, and the another feature indicates at least one of text information, a label, time, and a region. A data structure of the sample interaction data is not limited in this embodiment of this application.

The at least one sample data group includes at least one positive sample data group and at least one negative sample data group that is randomly sampled, there is an interaction event between the sample object and the sample item in the positive sample data group, and there is no interaction event between the sample object and the sample item in the negative sample data group. Optionally, after obtaining a dataset in a database, the computer device preprocesses the dataset. The preprocessing includes noise reduction processing and/or error data removal processing. A preprocessed dataset is divided to obtain a training sample set and a test sample set.

Optionally, content in both the training sample set and the test sample set indicates an interaction status between an object and an item. The training sample set includes historical interaction data of a plurality of objects in a first preset time period, the test sample set includes historical interaction data of a plurality of objects in a second preset time period, the second preset time period is a time period (for example, a last day or last several days) in the preset statistical periodicity, and the first preset time period is a time period other than the preset time period in the preset statistical periodicity.

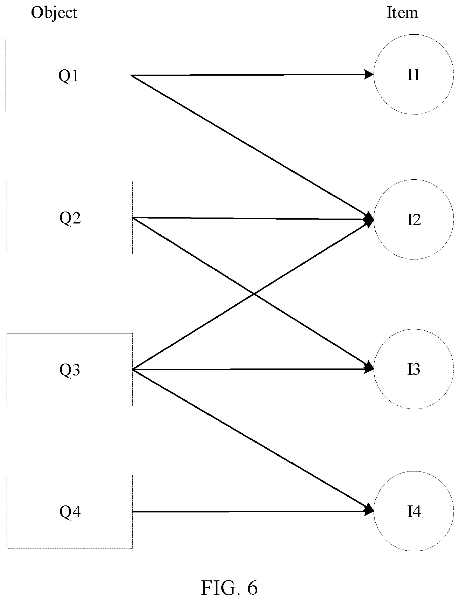

In an illustrative example, an interaction status that is between an object and an item and that is indicated by the training sample set is shown in FIG. 6. Items that have interacted with an object Q1 are an item I1 and an item I2, items that have interacted with an object Q2 are the item I2 and an item 13, items that have interacted with an object Q3 are the item I2, the item 13, and an item I4, and an item that has interacted with an object Q4 is the item I4.

Optionally, the computer device collects statistics about a co-occurrence frequency between a plurality of items based on the historical interaction data, and generates a first adjacency matrix file between items. The first adjacency matrix file indicates a quantity of times that any two items have interacted with a same object.

Optionally, the computer device collects statistics about a co-occurrence frequency between a plurality of objects based on the historical interaction data, and generates a second adjacency matrix file between objects. The second adjacency matrix file indicates a quantity of times that any two objects have interacted with a same item.

Optionally, the training sample set further includes the first adjacency matrix file generated based on the co-occurrence frequency between items and/or the second adjacency matrix file generated based on the co-occurrence frequency between objects.

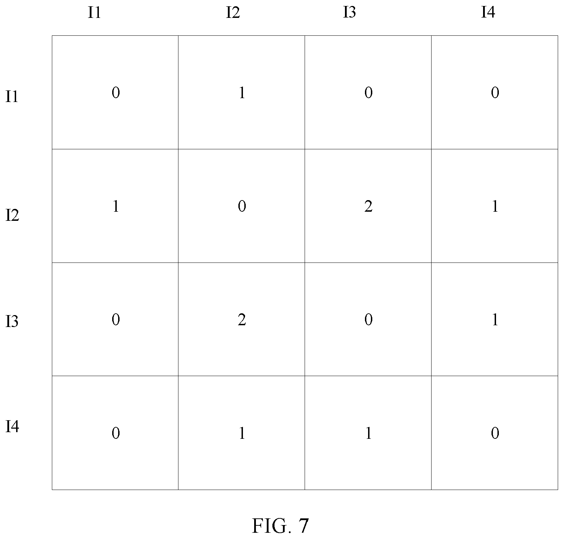

In an illustrative example, based on the interaction status shown in FIG. 6, the first adjacency matrix file between items is generated. As shown in FIG. 7, a quantity of times that the item I1 and the item I1 have interacted with a same object is 0, a quantity of times that the item I1 and the item I2 have interacted with a same object is 1, a quantity of times that the item I1 and the item I3 have interacted with a same object is 0, and a quantity of times that the item I1 and the item I4 have interacted with a same object is 0; a quantity of times that the item I2 and the item I2 have interacted with a same object is 0, a quantity of times that the item I2 and the item I3 have interacted with a same object is 2, and a quantity of times that the item I2 and the item I4 have interacted with a same object is 1; a quantity of times that the item I3 and the item I3 have interacted with a same object is 0, and a quantity of times that the item I3 and the item I4 have interacted with a same object is 1; and a quantity of times that the item I4 and the item I4 have interacted with a same object is 0.

Step 502: For each of the at least one sample data group, input the sample interaction data to an initial parameter model to obtain a training result.

Optionally, after obtaining the training sample set, the test sample set, and a filtered adjacency matrix (the first adjacency matrix and/or the second adjacency matrix), the computer device reads all files, and initializes nodes in the initial parameter model.

Optionally, the initial parameter model is established based on a graph neural network model. The graph neural network model includes one convolutional layer, and the convolutional layer indicates an association relationship between a sample object and a sample item.

Optionally, node initialization of the initial parameter model is performed in a form of random initialization.

For example, for each sample data group, the computer device creates an input-output pair corresponding to the sample data group. An input parameter in the input-output pair is the sample data group, and a target parameter is correct recommendation information in the sample data group. The computer device inputs the input parameter to the initial parameter model to obtain a training result.

Optionally, the input-output pair is represented by using an eigenvector.

Step 503: obtain a training loss value through calculation based on the training result and the correct recommendation information by using a preset loss function, where the training loss value indicates an error between the training result and the correct recommendation information. Based on a simplified idea of a light graph convolutional network (LightGCN), an information aggregation process in a graph neural network is further simplified. A model convergence condition is simulated to directly omit a calculation process that is at a message passing layer and that requires a large amount of calculation time, and final object and item vectors are directly calculated to achieve fast model convergence.

In a possible implementation, the preset loss function includes a first loss function and a second loss function, the first loss function is a loss function that is set based on an association relationship between the sample object and the sample item, and the second loss function is a loss function of a preset type.

Optionally, the second loss function is a mean squared error (Mean Squared Error, MSE) loss function or a binary cross entropy (Binary Cross Entropy, BCE) loss function. This is not limited in this embodiment of this application.

Optionally, a first loss value is determined based on the training result and the correct recommendation information by using the first loss function, a second loss value is determined based on the second loss function, and the training loss value is determined based on the first loss value and the second loss value.

Optionally, the training loss value is determined based on the first loss value, the second loss value, and a first weight value. For example, the first loss value and the first weight value are multiplied to obtain a first product, and a sum of the first product and the second loss value is determined as the training loss value. The first weight value is a specified value, and the first weight value is used to balance the first loss value and the second loss value. For example, the first weight value is set by default or is customized.

For example, the training loss value $\mathcal{L}$ is determined based on the first loss value $\mathcal{L}_c$, the second loss value $\mathcal{L}_l$, and the first weight value $\alpha$ by using the following formula:

$$\mathcal{L} = \mathcal{L}_l + \alpha\mathcal{L}_c$$

For example, the first loss value $\mathcal{L}_c$ is obtained through calculation by using the first loss function shown in

the following formula:

$$\mathcal{L}_c = -\sum_{(u,i)\in N^+} \beta_{u,i} \log\left(\sigma\left(e_u e_i^T\right)\right) - \sum_{(u,j)\in N^-} \beta_{u,j} \log\left(\sigma\left(-e_u e_j^T\right)\right)$$

For example, the second loss value $\mathcal{L}_l$ is obtained through calculation by using the second loss function shown in the following formula:

$$\mathcal{L}_l = -\sum_{(u,i)\in N^+} \log\left(\sigma\left(e_u e_i^T\right)\right) - \sum_{(u,j)\in N^-} \log\left(\sigma\left(-e_u e_j^T\right)\right)$$

$\beta_{u,i}$, $\beta_{u,j}$ are constraint coefficients, $N^+$, $N^-$ are respectively the positive sample data group and the randomly sampled negative sample data group, $\sigma$ is a sigmoid activation function, $e_u$ is a low-dimensional vector expression of a sample object u, and $e_i$ and $e_j$ respectively represent a low-dimensional vector expression of a sample item i in the positive sample data group and a low-dimensional vector expression of a sample item j in the negative sample data group.
For example, $\beta_{u,i}$ is obtained through calculation by using the following formula:

$$\beta_{u,i} = \frac{1}{d_u}\sqrt{\frac{d_u + 1}{d_i + 1}}$$

$d_u$ is associated item information corresponding to the sample object u, the associated item information indicates an operation frequency of the sample object u, and the associated item information indicates at least one item that has interacted with the sample object u. $d_i$ is associated object information corresponding to the sample item i , the associated object information indicates popularity of the sample item i, and the associated object information indicates at least one object that has interacted with the sample item i.
For example, $\beta_{u,j}$ is obtained through calculation by using the following formula:

$$\beta_{u,j} = \frac{1}{d_u}\sqrt{\frac{d_u + 1}{d_j + 1}}$$

$d_u$ is associated item information corresponding to the sample object u, the associated item information indicates an operation frequency of the sample object u, and the associated item information indicates at least one item that has interacted with the sample object u. $d_j$ is associated object information corresponding to the sample item j, the associated object information indicates popularity of the sample item j, and the associated object information indicates at least one object that has interacted with the sample item j.
Optionally, associated item information of a sample object includes a quantity of at least one item that has interacted with the sample object, and associated object information of a sample item includes a quantity of at least one object that has interacted with the sample item.
In addition, the graph neural network usually cannot effectively use complete graph structure information. In this embodiment of this application, a relationship between items and a relationship between objects are established, and a new loss function is designed, so that information hidden in a graph structure can be further used, thereby effectively using other information in the entire graph structure.
In another possible implementation, the preset loss function includes a first loss function, a second loss function, and a third loss function, and the third loss function is a loss function that is set based on an association relationship between at least two sample items.
Optionally, a first loss value is determined based on the training result and the correct recommendation information by using the first loss function, a second loss value is determined based on the second loss function, a main loss value is determined based on the first loss value and the second loss value, a third loss value is determined based on the third loss function, and the training loss value is determined based on the main loss value and the third loss value.

For a process of determining the main loss value based on the first loss value and the second loss value, refer to the foregoing related description of determining the training loss value based on the first loss value and the second loss value. Details are not described herein again.

In this implementation, the training loss value is determined based on the main loss value, the third loss value, and a third weight value. The third weight value is a specified value, and the third weight value is used to balance the main loss value and the third loss value. For example, the third weight value is set by default or is customized.

For example, the training loss value $\mathcal{L}'$ is determined based on the main loss value $\mathcal{L}$, the third loss value $\mathcal{L}_I$, and the third weight value $\lambda$ by using the following formula:

$$\mathcal{L}' = \mathcal{L} + \lambda \mathcal{L}_I$$

For a process of determining the main loss value $\mathcal{L}$, refer to the foregoing formula for determining the training loss value based on the first loss value and the second loss value. Details are not described herein again.

For example, the third loss value $\mathcal{L}_I$ is obtained through calculation by using the following formula:

$$\mathcal{L}_I = \sum_{(u,i) \in N^+} \sum_{j \in S(i)} \omega_{i,j} \log\left(\sigma\left(e_u e_i^T\right)\right)$$

A similarity $\omega_{i,j}$ between an item i and an item j is:

$$\omega_{i,j} = \frac{G_{i,j}}{g_i - G_{i,i}} \sqrt{\frac{g_i}{g_j}}, g_i = \sum_k G_{i,k}$$

G is the first adjacency matrix between items, $G_{i,k}$ is a value in an $i^{th}$ row and a $k^{th}$ column in the first adjacency matrix, $G_{i,j}$ is a value in the $i^{th}$ row and a $j^{th}$ column in the first adjacency matrix, $G_{i,i}$ is a value in the $i^{th}$ row and an $i^{th}$ column in the first adjacency matrix, $g_i$ is a sum of all values in the $i^{th}$ row in the first adjacency matrix and represents a degree of the item i, and S(i) is a set including another item similar to the item i.

It should be noted that, in most scenarios, the first adjacency matrix between items is usually dense. To be specific, in the first adjacency matrix, one item co-occurs with a large quantity of items. If all co-occurred items are included in a calculation process, excessive noise is introduced into the third loss function. In a possible implementation, to reduce impact of noise, for each item, a plurality of other items are ranked in descending order of item similarities, the first K items obtained after ranking are determined as a to-be-calculated set, and calculation is performed by using the third loss function based on each item and a to-be-calculated set corresponding to the item. In other words, S(i) may be a set including K items that are most similar to the item i and that are determined based on the item similarity $\omega_{i,j}$.

Optionally, the preset loss function further includes a fourth loss function, and the fourth loss function is a loss function that is set based on an association relationship between at least two sample objects.

In another possible implementation, the preset loss function includes a first loss function, a second loss function, and a fourth loss function, and the fourth loss function is a loss function that is set based on an association relationship between at least two sample objects.

Optionally, a first loss value is determined based on the training result and the correct recommendation information by using the first loss function, a second loss value is determined based on the second loss function, a main loss value is determined based on the first loss value and the second loss value, a fourth loss value is determined based on the fourth loss function, and the training loss value is determined based on the main loss value and the fourth loss value.

In this implementation, the training loss value is determined based on the main loss value, the fourth loss value, and a fourth weight value. The fourth weight value is a specified value, and the fourth weight value is used to balance the main loss value and the fourth loss value. For example, the fourth weight value is set by default or is customized.

For example, the training loss value $\mathcal{L}'$ is determined based on the main loss value $\mathcal{L}$, the fourth loss value $\mathcal{L}_X$, and the fourth weight value $\gamma$ by using the following formula:

$$\mathcal{L}' = \mathcal{L} + \gamma \mathcal{L}_{\mathrm{x}}$$

It should be noted that, for a process of determining the training loss value based on the main loss value, the fourth loss value, and the fourth weight value, refer to the foregoing related description of determining the training loss value based on the main loss value, the third loss value, and the third weight value. Details are not described herein again.

In another possible implementation, the preset loss function includes a first loss function, a second loss function, a third loss function, and a fourth loss function.

Optionally, a first loss value is determined based on the training result and the correct recommendation information by using the first loss function, a second loss value is determined based on the second loss function, a main loss value is determined based on the first loss value and the second loss value, a third loss value is determined based on the third loss function, a fourth loss value is determined based on the fourth loss function, and the training loss value is determined based on the main loss value, the third loss value, and the fourth loss value.

For example, the training loss value $\mathcal{L}'$ is determined based on the main loss value $\mathcal{L}$, the third loss value $\mathcal{L}_{\mathrm{I}}$, the third weight value $\lambda$, the fourth loss value $\mathcal{L}_{\mathrm{x}}$, and the fourth weight value $\gamma$ by using the following formula:

$$\mathcal{L}' = \mathcal{L} + \lambda \mathcal{L}_{\mathrm{I}} + \gamma \mathcal{L}_{\mathrm{x}}$$

It should be noted that, for a process of determining the training loss value based on the main loss value, the third loss value, and the fourth loss value, refer to the foregoing related description of determining the training loss value. Details are not described herein again.

Step 504: Adjust a model parameter in the initial parameter model based on the training loss value corresponding to each of the at least one sample data group.

Optionally, the computer device determines a gradient direction of the target recommendation model based on the training loss value by using a backpropagation algorithm, and updates the model parameter in the target recommendation model forward layer by layer from an output layer of the target recommendation model.

Step 505: When a preset convergence condition is met, obtain the target recommendation model through training.

When the preset convergence condition is met, the computer device obtains the target recommendation model through training.

Optionally, the preset convergence condition includes: the training loss value is less than a preset error threshold, a training loss value between two iterations is less than a preset difference threshold, or a quantity of iterations is greater than a preset maximum quantity of iterations. This is not limited in this embodiment of this application.

Optionally, after training the target recommendation model, the computer device obtains a similarity between the target object and a plurality of items based on a vector representation of the target object. For example, a vector of an item is used to perform a dot product on vectors of a plurality of other items to obtain product values. The product value is in a positive correlation relationship with a similarity between two item nodes, to be specific, a larger product value indicates a higher similarity between the two items. Then, the plurality of other items are ranked in descending order of the product values, and the first N items obtained after ranking are output. These items may be considered as items that the object most interests in and are used as target items to be recommended to the object. In a recommendation phase of the target recommendation model, calculation may be performed offline, or directional recommendation may be performed online in real time.

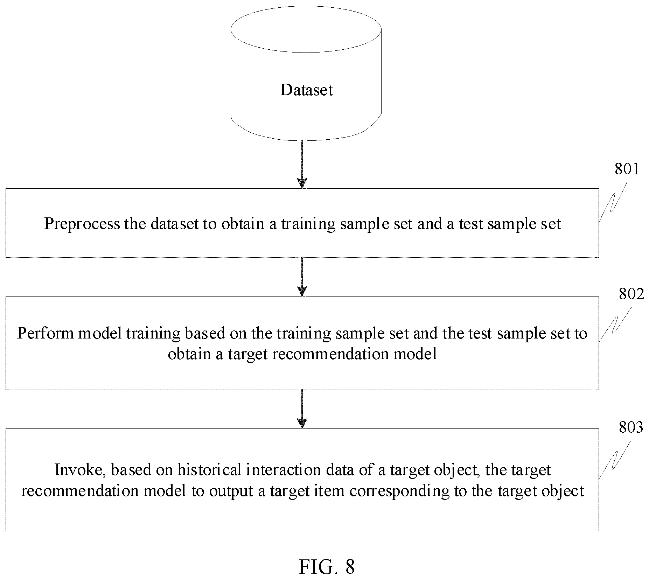

FIG. 8 is a schematic diagram of a principle of an item recommendation method according to an example embodiment of this application. This embodiment is described by using an example in which the method is applied to the computer device shown in FIG. 3. The method includes the following several steps.

Step 801: Preprocess a dataset to obtain a training sample set and a test sample set.

The computer device obtains a dataset in a database, and preprocesses the dataset to obtain a training sample set and a test sample set.

Step 802: Perform model training based on the training sample set and the test sample set to obtain a target recommendation model.

Optionally, the computer device performs model training on an initial parameter model based on the training sample set and the test sample set, to obtain the target recommendation model.

The target recommendation model includes a graph neural network model with one convolutional layer, and the convolutional layer indicates an association relationship between a sample object and a sample item.

Optionally, the target recommendation model indicates associated item information corresponding to each of

**EP 4 411 567 A1**

n sample objects and associated object information corresponding to each of m sample items, the associated item information indicates at least one item that has interacted with the sample object, the associated object information indicates at least one object that has interacted with the sample item, and n and m are positive integers.

Optionally, the target recommendation model further indicates an association relationship between at least two sample items and/or an association relationship between at least two sample objects.

Step 803: Invoke, based on historical interaction data of a target object, the target recommendation model to output a target item corresponding to the target object.

The computer device obtains the historical interaction data of the target object, and invokes, based on the historical interaction data, the trained target recommendation model to output the target item corresponding to the target object.

It should be noted that for related details of the steps in this embodiment, refer to related descriptions in the foregoing embodiment. Details are not described herein again.

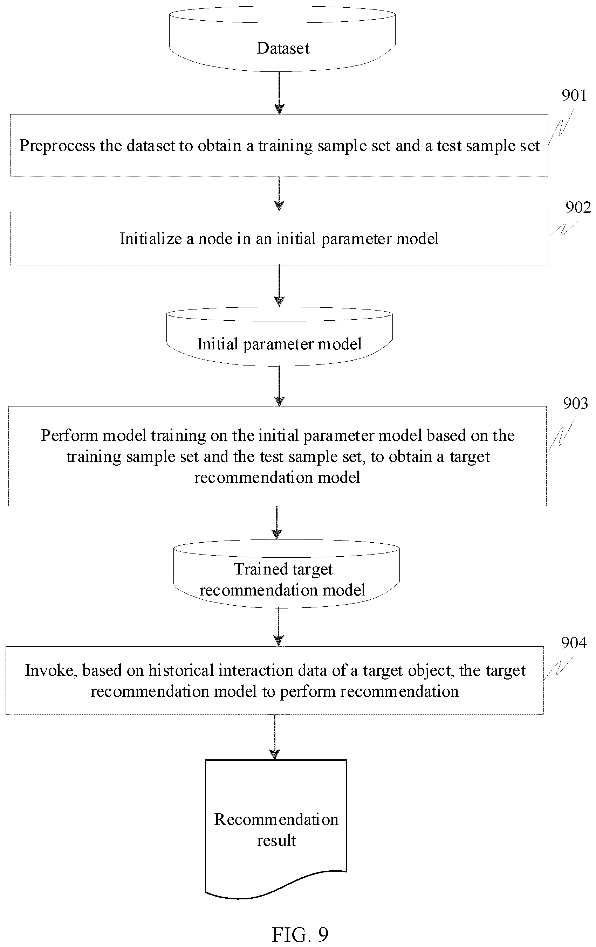

FIG. 9 is a schematic diagram of a principle of an item recommendation method according to an example embodiment of this application. This embodiment is described by using an example in which the method is applied to the computer device shown in FIG. 3. The method includes the following several steps.

Step 901: Preprocess a dataset to obtain a training sample set and a test sample set.

Step 902: Initialize a node in an initial parameter model.

Step 903: Perform model training on the initial parameter model based on the training sample set and the test sample set, to obtain a target recommendation model.

Step 904: Invoke, based on historical interaction data of a target object, the target recommendation model to output a recommendation result.

The recommendation result includes a target item to be recommended to the target object.

It should be noted that for related details of the steps in this embodiment, refer to related descriptions in the foregoing embodiment. Details are not described herein again.

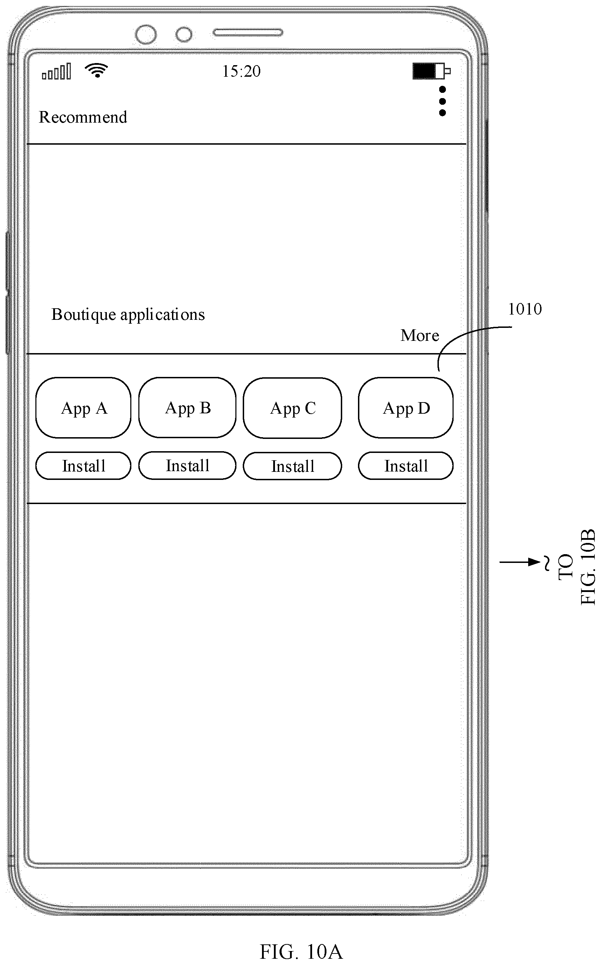

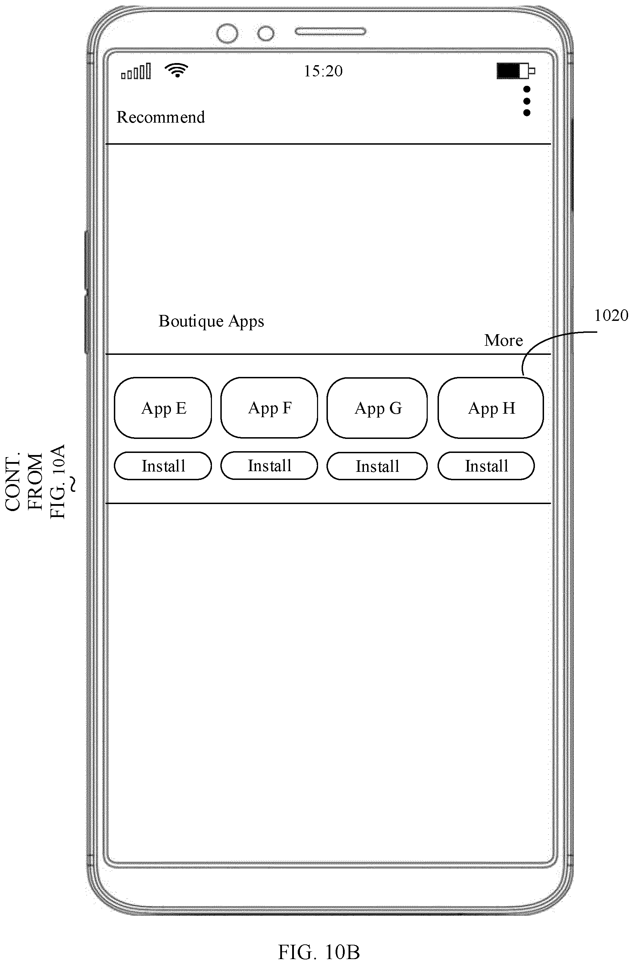

In an illustrative example, as shown in FIG. 10A, a first application icon list 1010 is displayed on a recommendation page of an AppGallery on a mobile phone of a user A. The first application icon list 1010 includes a plurality of application icons, for example, an icon "application A", an icon "application B", an icon "application C", and an icon "application D". These application icons are application icons recommended based on historical interaction data of the user A on the mobile phone in a previous period of time, and are ranked in descending order of relevance between the user A and items, so that an application icon that is most likely to be downloaded ranks at the most front location.

After viewing the first application icon list 1010 of the AppGallery on the mobile phone, the user A selects an interaction operation, such as browsing, tapping, or downloading, based on personal interests. Interaction data corresponding to these interaction operations is stored in a log as historical interaction data. The mobile phone or a server corresponding to the mobile phone uses the historical interaction data in the log as a training sample set to retrain the target recommendation model. For ease of description, the following is described by using only an example in which the mobile phone retrains a model. In the example scenario in FIG. 10A, the user A taps the application icon A, and the mobile phone records interaction data of the operation. In a preset statistical periodicity, after preprocessing the recorded historical interaction data, the mobile phone retrains the target recommendation model based on the new historical interaction data, re-evaluates a latest point of interest of the user A to obtain a plurality of application icons to be re-recommended, and displays, through update, a second application icon list 1020 on the recommendation page. The second application icon list 1020 includes a plurality of re-recommended application icons, for example, an icon "application E", an icon "application F", an icon "application G", and an icon "application H". In this way, an item recommendation effect is improved.

In an illustrative example, an experiment is performed on the target recommendation model provided in the embodiments of this application, and the target recommendation model is compared with other solutions in a related technology. Because the target recommendation model in the embodiments of this application is an extremely simplified graph neural network, the target recommendation model still has very fast operation efficiency while achieving a good effect. Therefore, comparison is performed in the experiment from two aspects: recommendation effect and model operation efficiency.

In one aspect, recommendation effects are compared. Performance that is achieved by a plurality of state-of-the-art models (state-of-the-art model, SOTA) in terms of indicators Recall@20 and NDCG@20 is compared on a plurality of public datasets (including six datasets: Amazon-Books, yelp2018, Gowalla, Amazon-Electronics, Amazon-CDs, and Movielens-1M), and performance that is achieved by recommendation models in the related technology in terms of the indicator AUC is compared on a target dataset. Recommendation effect achieved on the public dataset by the target recommendation model provided in the embodiments of this application is shown in Table 1:

**Table 1**

| Model | Amazon-Books | | Yelp2018 | | Gowalla | | Movielens-1M | |
|---|---|---|---|---|---|---|---|---|
| | Recall@20 | NDCG@20 | Recall@20 | NDCG@20 | F1@20 | NDCG@20 | Recall@20 | NDCG@20 |
| MF-BPR | 0.0338 | 0.0261 | 0.0549 | 0.0445 | 0.1616 | 0.1366 | 0.2153 | 0.2175 |
| CML | 0.0522 | 0.0428 | 0.0622 | 0.0536 | 0.167 | 0.1292 | 0.173 | 0.1563 |
| ENMF | 0.0359 | 0.0281 | 0.0624 | 0.0515 | 0.1523 | 0.1315 | 0.2315 | 0.2069 |
| DeepWalk | 0.0346 | 0.0264 | 0.0476 | 0.0378 | 0.1034 | 0.074 | 0.1348 | 0.1057 |
| LINE | 0.041 | 0.0318 | 0.0549 | 0.0446 | 0.1335 | 0.1056 | 0.2336 | 0.2226 |
| Node2Vec | 0.0402 | 0.0309 | 0.0452 | 0.036 | 0.1019 | 0.0709 | 0.1475 | 0.1186 |
| NGCF | 0.0344 | 0.0263 | 0.0579 | 0.0477 | 0.157 | 0.1327 | 0.2513 | 0.2511 |
| NIA-GCN | 0.0369 | 0.0287 | 0.0599 | 0.0491 | 0.1359 | 0.1106 | 0.2359 | 0.2242 |
| LR-GCCF | 0.0335 | 0.0265 | 0.0561 | 0.0343 | 0.1519 | 0.1285 | 0.2231 | 0.2124 |
| LightGCN | 0.0411 | 0.0315 | 0.0649 | 0.053 | 0.183 | 0.1554 | 0.2576 | 0.2427 |
| DGCF | 0.0422 | 0.0324 | 0.0654 | 0.0534 | 0.1842 | 0.1561 | 0.264 | 0.2504 |
| UltraGCN$_{Base}$ | 0.0504 | 0.0393 | 0.0667 | 0.0552 | 0.1845 | 0.1566 | 0.2671 | 0.2539 |
| UltraGCN | 0.0681 | 0.0556 | 0.0683 | 0.0561 | 0.1862 | 0.158 | 0.2787 | 0.2642 |
| Improv. | 61.37% | 71.60% | 4.43% | 5.06% | 1.09% | 1.22% | 5.57% | 5.51% |
| $p$-value | 4.03E-08 | 5.64E-08 | 1.61E-04 | 1.24E-04 | 7.21E-03 | 3 .44E-04 | 4.19E-05 | 2.23E-05 |

Recommendation effect achieved on the target dataset by the target recommendation model provided in the embodiments of this application is shown in Table 2:

**Table 2**

| Evaluation item | ENMF | GHCF | UltraGCN |
|---|---|---|---|
| AUC | 0.81893 | 0.84514 | 0.89535 |

It can be found from Table 1 that, on the public dataset, the recommendation effect of the target recommendation model provided in the embodiments of this application is significantly improved, and Recall@20 and NDCG@20 can be increased by 60% to 70% at most. It can be found from Table 2 that, on the target dataset, an offline experiment proves that compared with indicator AUCs of an online efficient neural matrix factorization (Extended Non-negative Matrix, ENMF) model and graph heterogeneous collaborative filtering (Graph Heterogeneous Collaborative Filtering, GHCF) model, the indicator AUC of the target recommendation model provided in the embodiments of this application is separately increased by 9.33% and 5.94%, and the recommendation effect is also significantly improved.

In another aspect, model operation efficiency is compared. The target recommendation model is compared with the LightGCN model on the public dataset, and overall operation time of the two models under a specified condition is compared. An experimental result is shown in Table 3:

**Table 3**

| Model | Training duration (minute) | Recall@20 | NDCG@20 |
|---|---|---|---|
| MF-BPR | 12 m | 0.0338 | 0.0261 |
| ENMF | 2 h and 41 m | 0.0355 | 0.0277 |
| LR-GCCF | 1 hand 13 m | 0.0304 | 0.0185 |
| LightGCN | 1 h and 4 m | 0.0342 | 0.0262 |

(continued)

| Model | Training duration (minute) | Recall@20 | NDCG@20 |
|---|---|---|---|
| UltraGCN | 45 m | 0.0681 | 0.0556 |

Efficiency of the target recommendation model provided in the embodiments of this application is compared with efficiency of another model in 75 epochs (epochs). An experimental result is shown in Table 4:

**Table 4**

| Model | Training duration (minute) | Recall@20 | NDCG@20 |
|---|---|---|---|
| MF-BPR | 12 m | 0.0338 | 0.0261 |
| ENMF | 2 h and 41 m | 0.0355 | 0.0277 |
| LR-GCCF | 1 h and 13 m | 0.0304 | 0.0185 |
| LightGCN | 1 h and 4 m | 0.0342 | 0.0262 |
| UltraGCN | 45 m | 0.0681 | 0.0556 |

It can be found from Table 3 that, in terms of overall model running efficiency, convergence of the target recommendation model provided in the embodiments of this application is completed in only 45 minutes. In Table 4, running efficiency in 75 epochs is compared, and an operation effect of the target recommendation model provided in the embodiments of this application is almost doubled compared with that of the LightGCN model. In addition, it can be learned that in a fixed epoch, the recommendation effect of the target recommendation model provided in the embodiments of this application is also better than that of the LightGCN model by more than 100%. In conclusion, the target recommendation model in the embodiments of this application uses a more simplified framework structure of a graph neural network model. A convergence condition of the model in a case in which there is an infinite quantity of message passing layers in a graph neural network is deduced, and the convergence condition is directly fitted, to omit calculation at the message passing layer in the graph neural network, so that model operation time is greatly reduced, operation efficiency of the model is greatly improved, and the graph neural network model can be well used online.

In addition, for a case in which the graph neural network cannot use graph structure information more deeply in a related technology, in the embodiments of this application, a relationship between an object and an item is fully mined based on the graph neural network model, and a relationship between items and a relationship between objects are modeled. The graph structure information is used more deeply, so that a point of interest of an object can be found more accurately, so as to recommend a more related item to a user, thereby improving an item recommendation effect. The following describes apparatus embodiments of this application, which may be used to perform the method embodiments of this application. For details not disclosed in the apparatus embodiments of this application, refer to the method embodiments of this application.

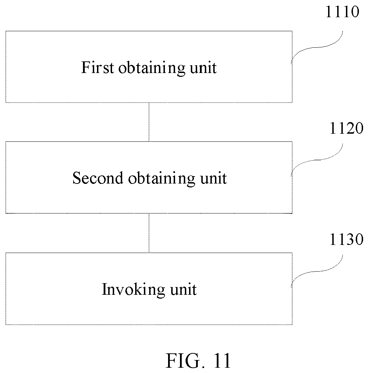

FIG. 11 is a block diagram of an item recommendation apparatus according to an example embodiment of this application. The apparatus can be implemented by software, hardware, or a combination of software and hardware, to form all or a part of the computer device provided in FIG. 3. The apparatus may include a first obtaining unit 1110, a second obtaining unit 1120, and an invoking unit 1130.

The first obtaining unit 1110 is configured to obtain historical interaction data of a target object, where the historical interaction data indicates a historical interaction event between the target object and at least one item.

The second obtaining unit 1120 is configured to obtain a pre-trained target recommendation model, where the target recommendation model is a neural network model established based on an association relationship between a sample object and a sample item.

The invoking unit 1130 is configured to invoke, based on the historical interaction data, the target recommendation model to output a target item corresponding to the target object.

In a possible implementation, the target recommendation model indicates associated item information corresponding to each of n sample objects and associated object information corresponding to each of m sample items, the associated item information indicates at least one item that has interacted with the sample object, the associated object information indicates at least one object that has interacted with the sample item, and n and m are positive integers.

In another possible implementation, the target recommendation model further indicates an association relationship between at least two sample items and/or an association relationship between at least two sample objects.

In another possible implementation, the invoking unit 1130 is further configured to:

input the historical interaction data to the target recommendation model, to output the target item corresponding to the target object, where

the target recommendation model is obtained through training based on at least one sample data group, each sample data group includes sample interaction data and pre-labeled correct recommendation information, and the sample interaction data indicates a sample object and a corresponding sample item.

In another possible implementation, the apparatus further includes a training unit, and the training unit is configured to:

obtain a training sample set, where the training sample set includes the at least one sample data group;
for each of the at least one sample data group, input the sample interaction data to an initial parameter model to obtain a training result;
obtain a training loss value through calculation based on the training result and the correct recommendation information by using a preset loss function, where the training loss value indicates an error between the training result and the correct recommendation information;
adjust a model parameter in the initial parameter model based on the training loss value corresponding to each of the at least one sample data group; and
when a preset convergence condition is met, obtain the target recommendation model through training.

In another possible implementation, the at least one sample data group includes at least one positive sample data group and at least one negative sample data group that is randomly sampled, there is an interaction event between the sample object and the sample item in the positive sample data group, and there is no interaction event between the sample object and the sample item in the negative sample data group.

In another possible implementation, the preset loss function includes a first loss function and a second loss function, the first loss function is a loss function that is set based on an association relationship between the sample object and the sample item, and the second loss function is a loss function of a preset type.

In another possible implementation, the preset loss function further includes a third loss function, and the third loss function is a loss function that is set based on an association relationship between at least two sample items.

In another possible implementation, the preset loss function further includes a fourth loss function, and the fourth loss function is a loss function that is set based on an association relationship between at least two sample objects.

In another possible implementation, the item includes at least one of text, a link, a product, a service, and concept information.

It should be noted that, when the apparatus provided in the foregoing embodiment implements the functions of the apparatus, division of the foregoing functional modules is merely used as an example for description. In actual application, the foregoing functions may be allocated to different functional modules for completion based on a requirement, to be specific, an inner structure of a device is divided into different functional modules to complete all or some of the functions described above. In addition, the apparatus provided in the foregoing embodiment and the method embodiments belong to a same concept. For a specific implementation process of the apparatus, refer to the method embodiments. Details are not described herein again.

An embodiment of this application further provides an item recommendation apparatus, and the apparatus includes: a processor, and a memory configured to store instructions that can be executed by the processor.

The processor is configured to: when executing the instructions, implement the methods performed by the computer device in the foregoing embodiments.

An embodiment of this application further provides a computer program product. The computer program product includes computer-readable instructions. When the computer-readable instructions are run on a computer device, the computer device is enabled to perform the methods performed by the computer device in the foregoing embodiments.

An embodiment of this application further provides a nonvolatile computer-readable storage medium. The nonvolatile computer-readable storage medium stores computer program instructions. When the computer program instructions are executed by a processor, the methods performed by the computer device in the foregoing embodiments are implemented.

The computer-readable storage medium may be a tangible device that can retain and store instructions for use by an instruction execution device. For example, the computer-readable storage medium may be but is not limited to - - an electrical storage device, a magnetic storage device, an optical storage device, an electromagnetic storage device, a semiconductor storage device, or any suitable combination of the foregoing. More specific examples (non-exhaustive list) of computer-readable storage media include: a portable computer disk, a hard disk, a random access memory (Random Access Memory, RAM), a read-only memory (Read-Only Memory, ROM), an erasable programmable read-only memory (Electrically Programmable Read-Only Memory, EPROM, or a flash memory), a static random access memory (Static Random Access Memory, SRAM), a portable compact disc read-only memory (Compact Disc Read-Only Memory, CD-ROM), a digital video disc (Digital Video Disc, DVD), a memory stick, a floppy disk, a mechanical encoding device, where for example, the mechanical encoding device stores a punched card of an instruction or a protrusion structure in a groove, and any suitable combination of the foregoing.

The computer-readable program instructions or code described herein may be downloaded from the computer-readable storage medium to each computing/processing device or downloaded to an external computer or an external storage device through a network such as the Internet, a local area network, a wide area network, and/or a wireless network. The network may include a copper transmission cable, optical fiber transmission, wireless transmission, a router, a firewall, a switch, a gateway computer, and/or an edge server. A network adapter card or a network interface in each computing/processing device receives the computer-readable program instructions from the network and forwards the computer-readable program instructions for storage in a computer-readable storage medium in each computing/processing device.

The computer program instructions used to perform operations in this application may be assembly instructions, instruction set architecture (Instruction Set Architecture, ISA) instructions, machine instructions, machine-related instructions, microcode, firmware instructions, status setting data, or source code or target code written in any combination of one or more programming languages. The programming languages include an object-oriented programming language - such as Smalltalk or C++, and a conventional procedural programming language - such as a "C" language or a similar programming language. The computer-readable program instructions may be entirely executed on a user computer, partially executed on the user computer, executed as an independent software package, partially executed on the user computer and partially executed on a remote computer, or entirely executed on the remote computer or a server. In a case related to the remote computer, the remote computer may be - connected to the user computer through any type of network - including a local area network (Local Area Network, LAN) or a wide area network (Wide Area Network, WAN), or may be connected to an external computer (for example, connected by using an Internet service provider through the Internet). In some embodiments, an electronic circuit, for example, a programmable logic circuit, a field-programmable gate array (Field-Programmable Gate Array, FPGA), or a programmable logic array (Programmable Logic Array, PLA), is customized by using status information of the computer-readable program instructions through personalization. The electronic circuit may execute the computer-readable program instructions to implement the aspects of this application.

The aspects of this application are described herein with reference to the flowcharts and/or block diagrams of the method, the apparatus (system), and the computer program product according to embodiments of this application. It should be understood that each block in the flowcharts and/or the block diagrams and a combination of blocks in the flowcharts and/or the block diagrams may be implemented by using the computer-readable program instructions.

These computer-readable program instructions may be provided to a processor of a general-purpose computer, a dedicated computer, or another programmable data processing apparatus to generate a machine, so that when these instructions are executed by the processor of the computer or the another programmable data processing apparatus, an apparatus for implementing a specified function/action in one or more blocks in the flowcharts and/or the block diagrams is generated. These computer-readable program instructions may alternatively be stored in the computer-readable storage medium. These instructions enable a computer, a programmable data processing apparatus, and/or another device to work in a specific manner. Therefore, the computer-readable medium storing the instructions includes an artifact that includes instructions for implementing the aspects of a function/action specified in one or more blocks in the flowcharts and/or the block diagrams.

The computer-readable program instructions may alternatively be loaded onto a computer, another programmable data processing apparatus, or another device, so that a series of operation steps is performed on the computer, the another programmable data processing apparatus, or the another device to generate a computer-implemented process. Therefore, the instructions executed on the computer, the another programmable data processing apparatus, or the another device implement a function/action specified in one or more blocks in the flowcharts and/or the block diagrams. The flowcharts and the block diagrams in the accompanying drawings show system architectures, functions, and operations of possible implementations of the apparatus, the system, the method, and the computer program product according to a plurality of embodiments of this application. In this regard, each block in the flowcharts or the block diagrams may represent a module, a program segment, or a part of the instructions, and the module, the program segment, or the part of the instructions includes one or more executable instructions used to implement a specified logical function. In some alternative implementations, a function marked in the block may alternatively occur in a sequence different from that marked in the accompanying drawings. For example, two consecutive blocks may actually be executed basically in parallel, and may sometimes be executed in a reverse sequence. This depends on a related function.

It should also be noted that, each block in the block diagrams and/or the flowcharts and a combination of blocks in the block diagrams and/or the flowcharts may be implemented by hardware (for example, a circuit or an ASIC (Application-Specific Integrated Circuit, application-specific integrated circuit)) that performs a corresponding function or action, or may be implemented by a combination of hardware and software, for example, firmware.

Although this application is described herein with reference to the embodiments, in a process of implementing this application that claims protection, a person skilled in the art may understand and implement other variations of the disclosed embodiments by viewing the accompanying drawings, the disclosed content, and the appended claims. In the claims, the word "comprising" (comprising) does not exclude another component or step, and "a" or "one" does not exclude a case of "a plurality of". A single processor or another unit may implement several functions enumerated in the claims. Some measures are recorded in dependent claims that are different from each other, but this does not mean that these measures cannot be combined to produce a good effect.

Embodiments of this application have been described above. The foregoing descriptions are example descriptions rather than exhaustive descriptions, and are not limited to the disclosed embodiments. Many modifications and changes are apparent to a person of ordinary skill in the art without departing from the scope and spirit of the described embodiments. Selection of the terms used in this specification is intended to best explain principles, actual application, or improvements to technologies in the market that are of the embodiments, or to enable another person of ordinary skill in the art to understand the embodiments disclosed in this specification.

**Claims**

1. An item recommendation method, wherein the method comprises:

    obtaining historical interaction data of a target object, wherein the historical interaction data indicates a historical interaction event between the target object and at least one item;
    obtaining a pre-trained target recommendation model, wherein the target recommendation model comprises a graph neural network model with one convolutional layer, and the convolutional layer indicates an association relationship between a sample object and a sample item; and
    invoking, based on the historical interaction data, the target recommendation model to output a target item corresponding to the target object.

2. The method according to claim 1, wherein the target recommendation model indicates associated item information corresponding to each of n sample objects and associated object information corresponding to each of m sample items, the associated item information indicates at least one item that has interacted with the sample object, the associated object information indicates at least one object that has interacted with the sample item, and n and m are positive integers.

3. The method according to claim 1 or 2, wherein the target recommendation model further indicates an association relationship between at least two sample items and/or an association relationship between at least two sample objects.

4. The method according to any one of claims 1 to 3, wherein the invoking, based on the historical interaction data, the target recommendation model to output a target item corresponding to the target object comprises:

    inputting the historical interaction data to the target recommendation model, to output the target item corresponding to the target object, wherein
    the target recommendation model is obtained through training based on at least one sample data group, each sample data group comprises sample interaction data and pre-labeled correct recommendation information, and the sample interaction data indicates a sample object and a corresponding sample item.

5. The method according to claim 3, before the obtaining a pre-trained target recommendation model, further comprising:

    obtaining a training sample set, wherein the training sample set comprises the at least one sample data group;
    for each of the at least one sample data group, inputting the sample interaction data to an initial parameter model to obtain a training result;
    obtaining a training loss value through calculation based on the training result and the correct recommendation information by using a preset loss function, wherein the training loss value indicates an error between the training result and the correct recommendation information;
    adjusting a model parameter in the initial parameter model based on the training loss value corresponding to each of the at least one sample data group; and
    when a preset convergence condition is met, obtaining the target recommendation model through training.

6. The method according to claim 5, wherein the at least one sample data group comprises at least one positive sample data group and at least one negative sample data group that is randomly sampled, there is an interaction event between the sample object and the sample item in the positive sample data group, and there is no interaction event between the sample object and the sample item in the negative sample data group.

7. The method according to claim 5 or 6, wherein the preset loss function comprises a first loss function and a second loss function, the first loss function is a loss function that is set based on an association relationship between the sample object and the sample item, and the second loss function is a loss function of a preset type.

8. The method according to claim 7, wherein the preset loss function further comprises a third loss function, and the third loss function is a loss function that is set based on an association relationship between at least two sample items.

9. The method according to claim 7 or 8, wherein the preset loss function further comprises a fourth loss function, and the fourth loss function is a loss function that is set based on an association relationship between at least two sample objects.

10. The method according to any one of claims 1 to 9, wherein the item comprises at least one of text, a link, a product, a service, and concept information.

11. An item recommendation apparatus, wherein the apparatus comprises:

a first obtaining unit, configured to obtain historical interaction data of a target object, wherein the historical interaction data indicates a historical interaction event between the target object and at least one item;
a second obtaining unit, configured to obtain a pre-trained target recommendation model, wherein the target recommendation model comprises a graph neural network model with one convolutional layer, and the convolutional layer indicates an association relationship between a sample object and a sample item; and
an invoking unit, configured to invoke, based on the historical interaction data, the target recommendation model to output a target item corresponding to the target object.

12. The apparatus according to claim 11, wherein the target recommendation model indicates associated item information corresponding to each of n sample objects and associated object information corresponding to each of m sample items, the associated item information indicates at least one item that has interacted with the sample object, the associated object information indicates at least one object that has interacted with the sample item, and n and m are positive integers.

13. The apparatus according to claim 11 or 12, wherein the target recommendation model further indicates an association relationship between at least two sample items and/or an association relationship between at least two sample objects.

14. An item recommendation apparatus, wherein the apparatus comprises:

a processor; and
a memory configured to store instructions that can be executed by the processor, wherein
the processor is configured to implement the method according to any one of claims 1 to 10 when executing the instructions.

15. A nonvolatile computer-readable storage medium, wherein the nonvolatile computer-readable storage medium stores computer program instructions, and when the computer program instructions are executed by a processor, the method according to any one of claims 1 to 10 is implemented.

16. A computer program product, wherein the computer program product comprises computer-readable instructions, and when the computer-readable instructions are run on a computer device, the computer device is enabled to perform the method according to any one of claims 1 to 10.

FIG. 1

FIG. 2

| Processor | 10 |

| Communication interface | 30 |

| Operating system | 21 |
| First obtaining unit | 22 |
| Second obtaining unit | 23 |
| Invoking unit | 24 |
| Application program | 25 |

Memory 20

FIG. 3

Obtain historical interaction data of a target object, where the historical interaction data indicates a historical interaction event between the target object and at least one item

401

Obtain a pre-trained target recommendation model, where the target recommendation model includes a graph neural network model with one convolutional layer, and the convolutional layer indicates an association relationship between a sample object and a sample item

402

Invoke, based on the historical interaction data, the target recommendation model to output a target item corresponding to the target object

403

FIG. 4

501

Obtain a training sample set, where the training sample set includes at least one sample data group

502

For each of the at least one sample data group, input sample interaction data to an initial parameter model to obtain a training result

503

Obtain a training loss value through calculation based on the training result and correct recommendation information by using a preset loss function, where the training loss value indicates an error between the training result and the correct recommendation information

504

Adjust a model parameter in the initial parameter model based on the training loss value corresponding to each of the at least one sample data group

505

When a preset convergence condition is met, obtain a target recommendation model through training

FIG. 5

Object                                        Item

FIG. 6

|  | I1 | I2 | I3 | I4 |
|---|---|---|---|---|
| I1 | 0 | 1 | 0 | 0 |
| I2 | 1 | 0 | 2 | 1 |
| I3 | 0 | 2 | 0 | 1 |
| I4 | 0 | 1 | 1 | 0 |

FIG. 7

Dataset

Preprocess the dataset to obtain a training sample set and a test sample set   801

Perform model training based on the training sample set and the test sample set to obtain a target recommendation model   802

Invoke, based on historical interaction data of a target object, the target recommendation model to output a target item corresponding to the target object   803

FIG. 8

Dataset

Preprocess the dataset to obtain a training sample set and a test sample set

901

Initialize a node in an initial parameter model

902

Initial parameter model

Perform model training on the initial parameter model based on the training sample set and the test sample set, to obtain a target recommendation model

903

Trained target recommendation model

Invoke, based on historical interaction data of a target object, the target recommendation model to perform recommendation

904

Recommendation result

FIG. 9

FIG. 10A

CONT. FROM FIG. 10A ~

FIG. 10B

1110

First obtaining unit

1120

Second obtaining unit

1130

Invoking unit

FIG. 11

| INTERNATIONAL SEARCH REPORT | International application No. |
|---|---|
| | **PCT/CN2022/117056** |

**A. CLASSIFICATION OF SUBJECT MATTER**

G06F 16/9535(2019.01)i

According to International Patent Classification (IPC) or to both national classification and IPC

**B. FIELDS SEARCHED**

Minimum documentation searched (classification system followed by classification symbols)

G06F

Documentation searched other than minimum documentation to the extent that such documents are included in the fields searched

Electronic data base consulted during the international search (name of data base and, where practicable, search terms used)

CNPAT, CNKI, WPI, EPODOC, IEEE: 推荐, 一层, 只有, 仅有, 图卷积, 图网络, 图神经网络, 卷积层, 历史, 交互, 对象, GNN, GCN, only one, history, interaction, recommendation, layer, object

**C. DOCUMENTS CONSIDERED TO BE RELEVANT**

| Category* | Citation of document, with indication, where appropriate, of the relevant passages | Relevant to claim No. |
|---|---|---|
| Y | CN 112905900 A (LIAONING TECHNICAL UNIVERSITY) 04 June 2021 (2021-06-04) description, paragraphs [0004]-[0136], and figures 1-6 | 1-16 |
| Y | CN 112633482 A (SOUTH CHINA INSTITUTE OF SOFTWARE ENGINEERING. GU) 09 April 2021 (2021-04-09) description, paragraphs [0043]-[0074], and figures 2-3 | 1-16 |
| Y | CN 112084407 A (LIAONING TECHNICAL UNIVERSITY) 15 December 2020 (2020-12-15) description, paragraphs [0004]-[0124], and figures 1-6 | 1-16 |
| A | CN 113362131 A (HEFEI UNIVERSITY OF TECHNOLOGY) 07 September 2021 (2021-09-07) entire document | 1-16 |
| A | US 2021110436 A1 (VISA INTERNATIONAL SERVICE ASSOCIATION) 15 April 2021 (2021-04-15) entire document | 1-16 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **17 November 2022** | **29 November 2022** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

34

**INTERNATIONAL SEARCH REPORT**
Information on patent family members

| International application No. |
| --- |
| **PCT/CN2022/117056** |

| Patent document cited in search report | | | Publication date (day/month/year) | Patent family member(s) | Publication date (day/month/year) |
| --- | --- | --- | --- | --- | --- |
| CN | 112905900 | A | 04 June 2021 | None | |
| CN | 112633482 | A | 09 April 2021 | None | |
| CN | 112084407 | A | 15 December 2020 | None | |
| CN | 113362131 | A | 07 September 2021 | None | |
| US | 2021110436 | A1 | 15 April 2021 | None | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111223081